# EUROPEAN PATENT APPLICATION

(11) **EP 1 176 809 A1**
(43) Date of publication of application: **30.01.2002**
(21) Application number: 00402189.5
(22) Date of filing: 28.07.2000
(51) Int. Cl.: H04N 5/04

(54) **Synchronisation circuit for a display device**

(71) Applicant: THOMSON multimedia, 92100 Boulogne Billancourt (FR)
(72) Inventor: Cheong, Yew Honn, 92100 Boulogne Billancourt (FR)
(74) Representative: Bonnans, Arnaud

(57) **Abstract**

The invention is about a display device comprising a synchronisation circuit (16) generating a vertical synchronisation signal and a horizontal synchronisation signal. The horizontal synchronisation signal comprises pulses.

The synchronisation circuit (16) triggers the vertical synchronisation signal in synchronism with one of the pulses or exactly between two of the pulses.

The invention also proposes a process for generating a vertical synchronisation signal in a display device including the following steps :
- waiting for a first event in a signal indicative of the vertical scan of the display device ;
- waiting for a second event in a horizontal synchronisation signal ;
- triggering a third event in the vertical synchronisation signal.

## Description

The invention relates to a display device, to a synchronisation circuit and to a process for generating a synchronisation signal in a display device.

Synchronisation circuits are used in display devices to inform other circuits (like an on-screen-display circuit) of the position on the screen which is currently scanned for display. Such information consists of a vertical synchronisation signal with pulses indicating the beginning of a field and of a horizontal synchronisation signal with pulses indicating the beginning of a line. An example of such a synchronisation circuit is disclosed in EP 0 562 413.

Some circuits receiving such information have very strict requirements, for instance concerning the phase relationship between the vertical and the horizontal synchronisation signals.

Due to tolerances and long-term evolution of the electronic components, conventional solutions sometimes fail to follow these requirements and the considered circuits then work incorrectly.

To solve this problem, the invention proposes a display device comprising a synchronisation circuit generating a vertical synchronisation signal and a horizontal synchronisation signal, the horizontal synchronisation signal comprising pulses, wherein the synchronisation circuit triggers the vertical synchronisation signal in synchronism with one of the pulses or exactly between two of the pulses.

According to further possible features of the invention :
- a D-flip-flop receives on a first input a signal indicative of the vertical scan of the display device and on a second input a signal based on the horizontal synchronisation signal ;
- said signal based on the horizontal synchronisation signal is a train of pulses with a frequency which is twice the frequency of the horizontal synchronisation signal;
- the signal indicative of the vertical scan of the display device is a composite synchronisation signal;
- the signal indicative of the vertical scan of the display device is an output pulse signal ;
- the display device displays alternatively even fields and odd fields and the synchronisation circuit triggers the vertical synchronisation signal in synchronism with said pulse for odd fields ;
- the display device displays alternatively even fields and odd fields and the synchronisation circuit triggers the vertical synchronisation signal exaclty between said pulses for even fields.

The invention thus also proposes a synchronisation circuit for a display device, comprising means for generating a vertical synchronisation signal and a horizontal synchronisation signal, the horizontal synchronisation signal comprising pulses, and having means for triggering the vertical synchronisation signal in synchronism with one of the pulses or exactly between two of the pulses.

The invention also proposes a process for generating a vertical synchronisation signal in a display device including the following steps :
- waiting for a first event in a signal indicative of the vertical scan of the display device ;
- waiting for a second event in a horizontal synchronisation signal;
- triggering a third event in the vertical synchronisation signal.

In a advantageous way,
- said first event is a rising edge ;
- said second event is a pulse ;
- said third event is a rising edge.

The invention and other features thereof will be better understood in the light of the following description made with reference to the attached drawings where :
- figure 1 represents the main elements of a television set realised according to the teachings of the invention ;
- figure 2 represents the synchronisation circuit of figure 1 ;
- figure 3a, 3b, 3c, 3d, 3e and 3f represent the voltage as a function of the time respectively at points 42, 61, 63, 64, 65 and 39 ;
- figures 4 and 5 represent a detailed embodiment of the synchronisation circuit of figure 1.

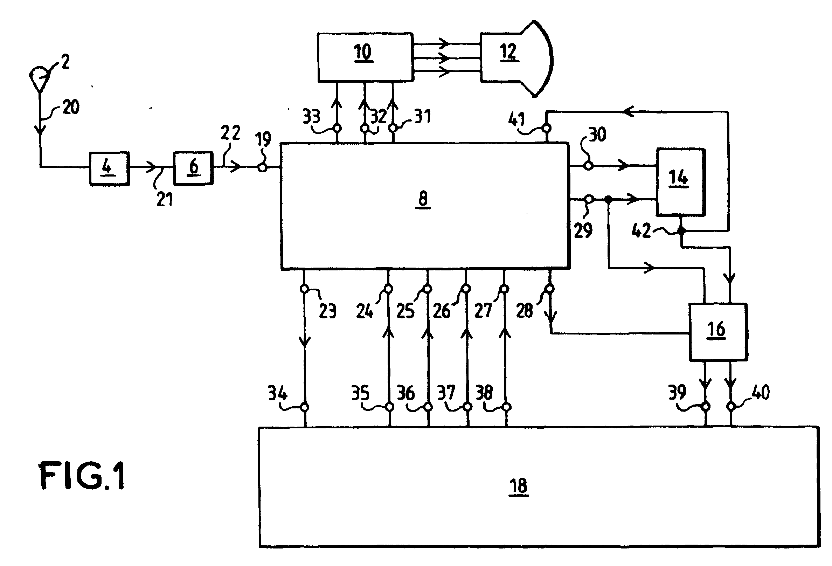

The television set of figure 1 comprises an antenna 2 which receives TV broadcasts from remote emitters, as frequency-multiplexed signals. These signals are transmitted via wire 20 to a tuner 4 which translates the signal corresponding to the broadcast to be watched to a signal of fixed frequency IF (IF stands for Intermediate Frequency), on wire 21. The signal on wire 21 is then passed to a demodulator 6 which generates a base-band signal of the CVBS-type on wire 22.

As a variation, the CVBS signal could be generated another way, for instance from a Video Cassette Recorder (VCR) or a DVD player.

The CVBS signal contains information regarding the luminance and chrominance of the picture to be displayed, as well as synchronisation information in order to display at correct locations on display 12 said luminance and chrominance.

A video circuit 8, for instance Toshiba TA1268N video integrated circuit, receives the CVBS signal from wire 22 on TV-IN pin 19 and converts it into three monochrome signals (respectively red signal R, green signal G and blue signal B). When no signal comes from decoder-and-OSD circuit 18 (*i.e.* when nothing is to be superimposed on the picture represented by the CVBS signal), the R,G,B signals are respectively output on R-OUT pin 31, G-OUT pin 32 and B-OUT pin 33 and sent to the display 12, here a cathode ray tube (CRT), through an amplifier 10.

The video circuit 8 also generates a horizontal output pulse signal at H-OUT pin 30 and a vertical output pulse signal at V-OUT pin 29. A horizontal ramp signal based on the horizontal output pulse signal drives the coil for horizontal deflection of the CRT and a vertical ramp signal based on the vertical output pulse signal drives the coil for vertical deflection of the CRT. In this purpose, H-OUT and V-OUT pins 29, 30 are connected to deflection circuit 14.

When a CVBS signal is received correctly, the horizontal output pulse signal and the vertical output pulse signal are based on the synchronisation information contained in the CVBS signal on wire 22. At other times, these signals are self-generated by the video circuit 8.

The deflection circuit 14 acts with a delay relatively to the horizontal output pulse signal and generates a fly-back pulse signal on wire 42 which is synchronised with the actual horizontal scan created by the deflection circuit and which is fed back to the video circuit 8 at FBP_IN pin 41.

The television set also comprises a decoder-and-OSD circuit 18 which is meant to produce an overlay picture to be superimposed on the background picture represented by the CVBS signal received at TV_IN pin 19 of the video circuit 8. (OSD stands for on-screen display.)

The decoder-and-OSD circuit 18 has a VIDEO_IN pin 34 for receiving a CVBS signal supposedly containing information on the overlay picture. (If there is no such information, nothing will be superimposed on the CVBS signal received at TV_IN pin 19 of the video circuit.) The information on the overlay picture is for instance coded in the vertical blanking intervals (VBI) of the CVBS signal incoming on VIDEO_IN pin 34.

The decoder-and-OSD circuit 18 can for instance receive an electronic program guide (EPG) coded in the VBI and is able to decode this information and to display the pages of this EPG represented as a RGB signal, *i.e.* as three monochrome signals respectively on output pins R_OUT 35, G_OUT 36 and B_OUT 37 of the decoder-and-OSD circuit 18. The decoder-and-OSD circuit 18 also comprises an OVL_OUT pin 38 carrying a so-called fast blanking signal, which indicates exactly when the signals on pins 35, 36, 37 represent the overlay picture and when, at the opposite, they should not be considered.

In order to synchronise the overlay picture with the display 12, *i.e.* to display the overlay picture at correct locations, the decoder-and-OSD circuit 18 receives on VSYNC_IN pin 39 and on HSYNC_IN pin 40 respectively a vertical synchronisation signal and a horizontal synchronisation signal indicating respectively the beginning of a field and the beginning of a line.

It is to be noted that the overlay picture is not necessarily superimposed to the picture represented by the CVBS signal received at pin 34 at the same moment. The function of pin 34 is to receive information, for instance coded in the VBI, which can be stored in a memory of the decoder-and-OSD circuit 18. The information, for instance EPG, can thus be displayed later on, superimposed on any background picture, even if no CVBS signal is received.

It should also be noted that there is now a trend to display a whole page of information (for instance EPG), which will consequently be superimposed to the whole background picture. Though nothing of the background picture will remain visible on the display 12, it should be understood that this will be described as an overlay picture superimposed on the background picture in the present description.

VIDEO_IN pin 34 of the decoder-and-OSD circuit 18 is connected to AV/SW OUT pin 23 of the video circuit 19 which basically carries the CVBS signal received at TV_IN pin 19 or another CVBS signal (for instance coming from a VCR).

R_OUT pin 35, G_OUT pin 36, B_OUT pin 37 and OVL_OUT pin 38 of the decoder-and-OSD circuit 18 are respectively connected to R-IN pin 24, G-IN pin 25, B-IN pin 26 and FB pin 27 of video circuit 8. Basically, the signals received on pins 24, 25, 26 (representing the overlay - or OSD - picture) are passed to R-OUT, G-OUT, B-OUT pins 31, 32, 33 as requested by the fast blanking signal on FB pin 27 (*i.e.* as instructed by the decoder-and-OSD circuit 18).

VSYNC_IN pin 39 and HSYNC_IN pin 40 of the decoder-and-OSD circuit 18 are connected to a synchronisation circuit 16 which generates the vertical synchronisation signal and the horizontal synchronisation signal based on the vertical output pulse signal at V-OUT pin 29, on the fly-back pulse signal on wire 42 and on a composite synchronisation signal available at SYNC_OUT pin 28 of the video circuit 8 when a correct CVBS signal is received at TV_IN pin 19.

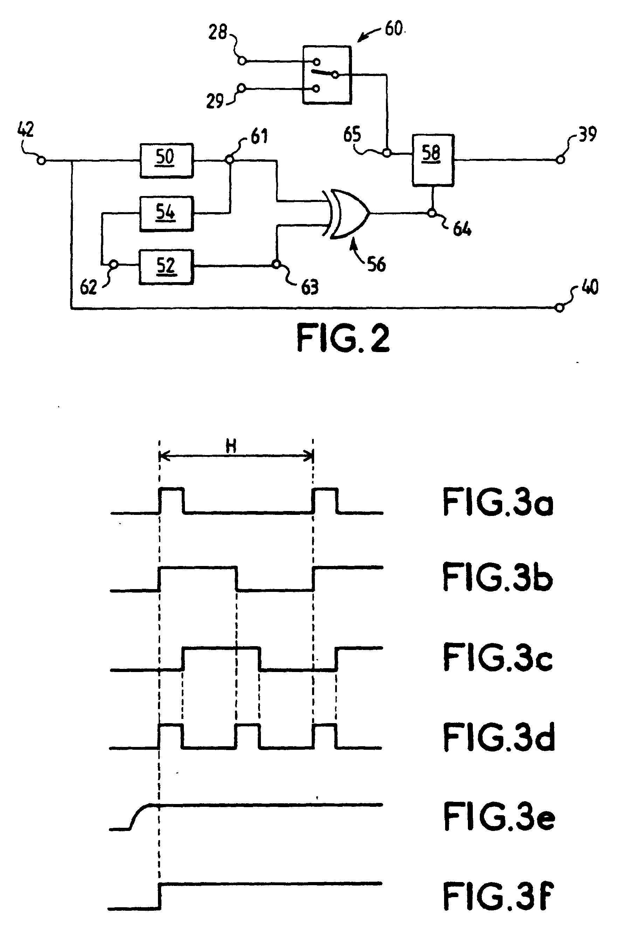

The logical operations realised by the synchronisation circuit will now be described with reference to figure 2.

The fly-back pulse signal from wire 42 (figure 3a) is passed on the one hand to HSYNC_IN pin 40 and on the other hand triggers a first monostable multivibrator 50 which generates a first train of 32-µs-long pulses at point 61 (figure 3b). The first train of pulses at point 61 is thus synchronised with horizontal flyback pulse signal, with a period of 64 µs (duration of one line).

First, this signal is passed through a delay circuit 54 and is used to trigger a second monostable multivibrator 52 which output a second train of 32-µs-long pulses at point 63 (figure 3c), delayed with respect to the first train but having same period. The delay circuit 54 realises a delay of about 5 µs.

Second, the first train (at point 64) and the second train (at point 63) are input to an XOR gate 56 which thus outputs an 5-µs-long pulses train having a period of 32 µs (half of a line duration) at point 64 (figure 3d). This last train of pulses is used to trigger a D-flip flop 58 (clock input CP).

An automatic switch 60, described with further details below, allows to select automatically between the composite synchronisation signal (pin 28) when it is available and the vertical output pulse signal (pin 29) when the former is not available. The selected signal is then passed to the data (D) input 65 of the D-flip flop 58. An example of a rising edge representing the beginning of an odd field is represented at figure 3e.

As can be seen on figure 3f, with such construction the D-flip flop 58 outputs at 39 a vertical synchronisation signal simultaneous to the first 5-µs-long pulse following the rising edge of the voltage at point 65.

In the case of an odd field, as represented on figure 3e and 3f, the vertical synchronisation signal thus rises concurrently to the horizontal synchronisation pulse (fly-back pulse) at 42. In the case of an even field, the rising edge of the vertical synchronisation signal at 39 takes place exactly between two fly-back pulses thanks to the train of 5-µs-long pulses with 32-µs period.

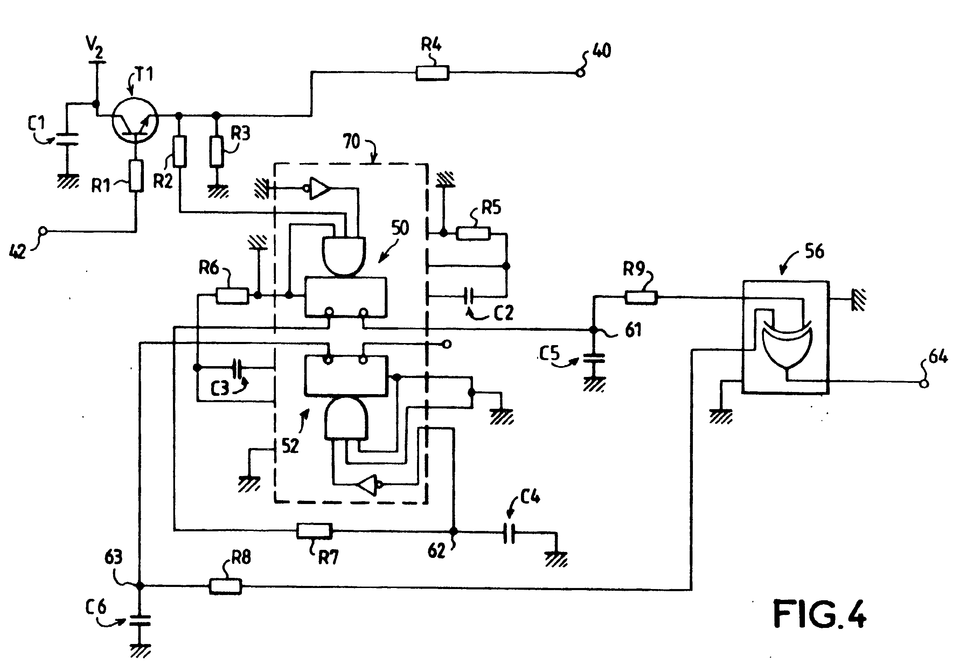

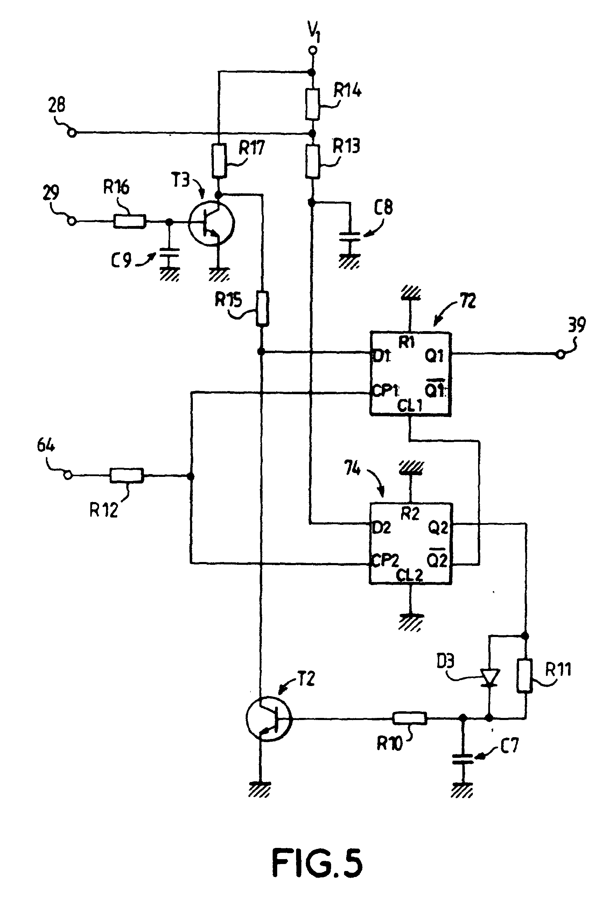

A detailed embodiment of the synchronisation circuit 16 will now be described with reference to figure 4 and figure 5.

The fly-back pulse signal from wire 42 controls a transistor T1 through a resistor R1 interposed between wire 42 and the base of transistor T1. The collector of transistor T1 is connected to a voltage source V2 (delivered by the power supply of the television set) and to ground via a capacitor C1. The emitter of transistor T1 is connected to the input of the monostable mulitvibrator 50 via a resistor R2, to ground via a resistor R3 and to horizontal synchronisation output (*i.e.* to HSYNC_IN pin 40) via a resistor R4.

Pulses of voltage V2 and triggered by the fly-back signal are thus delivered to the input of the first monostable multivibrator 50 and to HSYNC_IN pin 40 of the decoder-and-OSD circuit 18.

Both monostable multivibrators 50 and 52 are implemented by an single integrated circuit (IC) 70, namely Philips 74HC123. The input of the first monostable multivibrator 50 corresponds to pin referenced 2 on 74HC123. The inverted input of the first monostable multivibrator 50 (pin 1 74HC123) is grounded.

The first monostable multivibrator is timed by capacitor C3 and resistor R6 : in this purpose, pin 3 of 74HC123 is grounded and capacitor C3 is connected at one end to pin 6 of 74HC123 and at the other end to pin 7 of 74HC123 and to ground via resistor R6. The chosen value of C3 and R6 (see below) allows to generate pulses of 32-µs time-length, synchronised with the fly-back pulses.

Pin 8 of 74HC123 is grounded.

The output signal of the first monostable multivibrator 50 is generated at two locations : pins 4 and 13 of 74HC123. Pin 13 of 74HC123 corresponds to point 61.

Pin 4 of 74HC123 is connected to the (inverted) input 62 of the second monostable multivibrator 52 at pin 9 of 74HC123 through a resistor R7 ; a capacitor C4 also links input 62 (pin 9 of 74HC123) to ground. This arrangement of resistor R7 and capacitor C4 provides the delay circuit 54. The values of R7 and C4 (see below) are chosen to realise a delay of 5 µs.

Pins 10 and 11 of 74HC123 are grounded. The second monostable multivibrator 52 is timed by a resistor R5 and a capacitor C2. More specifically, a first end of capacitor C2 is connected to pin 14 of 74HC123 and the second end of capacitor C2 is connected first to pin 15 of 74HC123 and second to ground through resistor R5. Pin 16 of 74HC123 is grounded. As for the first monostable multivibrator 50, the values of C2 and R5 are chosen to generate pulses of 32-µs time length.

The outputs of the second monostable multivibrator are located at pins 5 and 12 of 74HC123. Pin 12 of 74HC123 is not used in the present circuit. Pin 5 of 74HC123 correspond to point 63.

Point 61 is connected to an input of the XOR gate 56 through a resistor R9 and to ground through a capacitor C5. Similarly, point 63 is connected to another input of the XOR gate 56 through a resistor R8 and to ground through a capacitor C6. Capacitors C5 and C6 and resistors R8 and R9 are meant to filter out possible interferences on television reception.

Both signals thus feed the XOR gate 56 which outputs the resulting signal at point 64 as explained below.

Now referring to figure 5, the signal at point 64 is passed to the clock inputs CP1, CP2 of a first and a second D-flip-flops 72, 74. Each D-flip-flop can be implemented by a Philips 74HC74 IC.

Point 28 carrying the composite synchronisation signal is connected to the data input D2 of the second D-flip-flop 74 through a resistor R13 and to a voltage source V1 via a resistor R14. A capacitor C8 also links data input D2 to ground in order to filter the composite synchronisation signal and to pass to D2 only the vertical synchronisation information.

The reset and clear pins R2, CL2 of the second D-flip-flop 74 are connected to ground.

The first output Q2 of the second D-flip-flop 74 is connected to a first end of a capacitor C7 through the parallel arrangement of a diode D3 and a resistor R11. The first end of capacitor C7 is also connected to the base of a transistor T2 via a resistor R10. The second end of capacitor C7 is connected to ground.

The emitter of transistor T2 is connected to ground and the collector of transistor T2 is connected to the data input D1 of the first D-flip-flop 72.

The data input D1 is also connected to point 29 carrying the vertical output pulse signal through a circuit mainly composed of a transistor T3, which base is connected to point 29 via a resistor R16 and to ground via a capacitor C9, which emitter is connected to ground and which collector is connected to the data input D1 of the first D-flip-flop via a resistor R15 and to voltage source V1 via a resistor R17.

When there is a continuous train of pulses at the first output Q2 of the second D-flip-flop 74 at the vertical scanning frequency - about 60 Hz in Western Europe - (that is : when the composite signal at point 28 is available), diode D3 and capacitor C7 rectify it and provide a DC voltage to the base of transistor T2 via resistor R10. The transistor T2 will then be ON and data input D1 of the first D-flip-flop 72 will be grounded.

To sum up, when the composite signal at point 28 is available (*i.e.* when the video signal is valid), the continuous train of pulses at first output Q2 of the second D-flip-flop 74 will make transistor T2 mute the vertical output pulse signal coming from point 29 by pulling data input D1 to ground.

At the opposite, when the composite signal at point 28 is not available, there is no output at first output Q2 of the second D-flip-flop 74 (0 V) and the DC voltage in capacitor C7 is discharged through resistor R11. Transistor T2 thus blocks and signal from point 29 is no more muted.

The second output Q2_ (inverted output) of the second D-flip-flop 74 is connected to the clear input CL1 of the first D-flip-flop 72. The reset input R1 of the first D-flip-flop 72 is connected to ground. Inverted output Q1_ of the first D-flip-flop 72 is not used in the present circuit.

The non-inverted output Q1 of the first D-flip-flop 74 thus generates a signal corresponding to output Q2 (inverted twice thus as initial) when the video signal is valid. At the opposite, output Q1 generates a signal following input D1 and triggered by rising edge of clock input CP1 when the video signal is not valid (as input D1 is not mute any more in this last case).

The circuit represented at figure 5 thus fulfils the functions of the automatic switch 60 and the D-flip-flop 58 at low cost.

The above described solution generates a vertical synchronisation signal which is as accurate as possible (coming from the composite synchronisation signal when possible), which is in good synchronism with the horizontal synchronisation signal and which is available even when no video signal is valid. This vertical synchronisation signal can thus be used with OSD circuits having very strict requirements.

The following values are used in the above-described example :
C1 = 10 nF
C2 = 10 nF
C3 = 10 nF
C4 = 3.3 nF
C5 = 3.3 nF
C6 = 1 nF
C7 = 2.2 uF
C8 = 1 nF
C9 = 47 pF
R1 = 12 kΩ
R2 = 150 Ω
R3 = 3.3 kΩ
R5 = 8 kΩ
R6 = 8 kΩ
R7 = 3.6 kΩ
R8 = 22 kΩ
R9 = 22 kΩ
R10 = 12 kΩ
R11 = 220 kΩ
R12 = 22 kΩ
R13 = 130 kΩ
R14 = 22 kΩ
R15 = 100 kΩ
R16 = 4.7 kΩ
R17 = 4.7 kΩ
R4 is a plain wire. T1, T2 and T3 are referenced BC848B and D3 is referenced 1N4148.

## Claims

1. Display device comprising a synchronisation circuit (16) generating a vertical synchronisation signal and a horizontal synchronisation signal, the horizontal synchronisation signal comprising pulses, **characterised in that** the synchronisation circuit (16) triggers the vertical synchronisation signal in synchronism with one of the pulses or exactly between two of the pulses.

2. Display device according to claim 1, wherein a D-flip-flop (58, 72, 74) receives on a first input (65, D1, D2) a signal indicative of the vertical scan of the display device and on a second input (64, CP1, CP2) a signal based on the horizontal synchronisation signal.

3. Display device according to claim 2, wherein said signal based on the horizontal synchronisation signal is a train of pulses with a frequency which is twice the frequency of the horizontal synchronisation signal.

4. Display device according to claim 2 or 3, wherein the signal indicative of the vertical scan of the display device is a composite synchronisation signal.

5. Display device according to claim 2 or 3, wherein the signal indicative of the vertical scan of the display device is an output pulse signal.

6. Display device according to any of claims 1 to 5, which displays alternatively even fields and odd fields, wherein the synchronisation circuit (16) triggers the vertical synchronisation signal in synchronism with said pulse for odd fields.

7. Display device according to any of claims 1 to 6, which displays alternatively even fields and odd fields, wherein the synchronisation circuit (16) triggers the vertical synchronisation signal exaclty between said pulses for even fields.

8. Synchronisation circuit (16) for a display device, comprising means for generating a vertical synchronisation signal and a horizontal synchronisation signal, the horizontal synchronisation signal comprising pulses, **characterised by** means for triggering the vertical synchronisation signal in synchronism with one of the pulses or exactly between two of the pulses.

9. Synchronisation circuit according to claim 8, wherein a D-flip-flop (58, 72, 74) receives on a first input (65, D1, D2) a signal indicative of the vertical scan of the display device and on a second input (64, CP1, CP2) a signal based on the horizontal synchronisation signal.

10. Process for generating a vertical synchronisation signal in a display device **characterised by** the following steps :
- waiting for a first event in a signal indicative of the vertical scan of the display device ;
- waiting for a second event in a horizontal synchronisation signal ;
- triggering a third event in the vertical synchronisation signal.

11. Process according to claim 10, wherein said first event is a rising edge.

12. Process according to claim 10 or 11, wherein said second event is a pulse.

13. Process according to any of claims 10 to 12, wherein said third event is a rising edge.
